# EUROPEAN PATENT APPLICATION

(11) **EP 2 224 206 A2**
(43) Date of publication of application: **01.09.2010**
(21) Application number: 10154203.3
(22) Date of filing: 22.02.2010
(51) Int. Cl.: G01C 9/06, G01C 9/10

(54) **Tilt sensor**

(30) Priority: 27.02.2009 TW 98106474
(71) Applicant: Everlight Electronics Co., Ltd., Tu Chen City, Taipei Hsien (TW)
(72) Inventor: Lai, Lu-Ming, Taiwan, ROC, Tucheng, Taipei (TW)
(74) Representative: Chamberlain, Alan James

(57) **Abstract**

A tilt sensor includes a body, a light emitting device, a first photosensitive device, a second photosensitive device, and a moving element. The body can tilt in a plurality of tilt directions. The light emitting device is disposed at the body for providing a light beam. The first photosensitive device is disposed at the body and at one side of the light emitting device. The second photosensitive device is disposed at the body and at another side of the light emitting device. The moving element is disposed at the body. When the body tilts toward different tilt directions, the moving element moves toward different tilt directions so that the light beam emitted by the light emitting device directly transmits to the first photosensitive device and the second photosensitive device or is sheltered from directly transmitting to at least one of the first photosensitive device and the second photosensitive device.

## Description

### BACKGROUND OF THE INVENTION

### 1. Field of the Invention

The present invention generally relates to a sensor, and more particularly, to a tilt sensor.

### 2. Description of Related Art

Generally speaking, most existing tilt sensors have two-phase induction (i.e., can only sense two tilt directions) and are very bulky. Accordingly, these conventional tilt sensors are not suitable for today's consumable electronic products (for example, cell phones) which are usually designed very small and slim.

In addition, two tilt sensors with two-phase induction are usually needed to form a tilt sensor with four-phase induction (for example, in the directions of up, down, left, and right). As a result, it is impossible to reduce the cost and volume of the tilt sensor or simplify the fabrication process thereof.

Thereby, a small-sized and low-cost tilt sensor suitable for today's small-sized and low-cost consumable electronic products is desired.

### SUMMARY OF THE INVENTION

Accordingly, the present invention is directed to a tilt sensor which can sense a plurality of tilt directions and has a reduced size.

The present invention provides a tilt sensor including a body, a light emitting device, a first photosensitive device, a second photosensitive device, and a moving element. The body can tilt in a plurality of tilt directions. The light emitting device is disposed at the body for providing a light beam. The first photosensitive device is disposed at the body and located at one side of the light emitting device. The second photosensitive device is disposed at the body and located at another side of the light emitting device. The moving element is disposed at the body. When the body tilts toward different tilt directions, the moving element moves toward different tilt directions so that the light beam emitted by the light emitting device directly transmits to the first photosensitive device and the second photosensitive device or is sheltered from directly transmitting to at least one of the first photosensitive device and the second photosensitive device.

According to an embodiment of the present invention, the body includes a moving area, a first containing area, a second containing area, a first channel, a third containing area, and a second channel. The moving element is located within the moving area. The first containing area has a first opening, wherein the light emitting device is located within the first containing area, and the first containing area is connected to the moving area through the first opening. The second containing area has a second opening, wherein the first photosensitive device is located within the second containing area, and the second containing area is connected to the moving area through the second opening and the first channel. The third containing area has a third opening, wherein the second photosensitive device is located within the third containing area, and the third containing area is connected to the moving area through the third opening and the second channel.

According to an embodiment of the present invention, the body includes a quadrate moving area, a first containing area, a second containing area, and a third containing area. The quadrate moving area has four apex angles, and the two sides of each of the apex angles respectively have an opening, wherein the moving element is located within the quadrate moving area. The first containing area is connected to the quadrate moving area through the opening, wherein the light emitting device is located within the first containing area. The second containing area is connected to the quadrate moving area through the opening, wherein the first photosensitive device is located within the second containing area. The third containing area is connected to the quadrate moving area through the opening, wherein the second photosensitive device is located within the third containing area. According to an embodiment of the present invention, the light beam emitted by the light emitting device passes through the opening, the quadrate moving area, and the opening in sequence, so as to directly transmit to the first photosensitive device and the second photosensitive device respectively.

According to an embodiment of the present invention, the tilt sensor further includes a plurality of pairs of metal pads respectively disposed at the apex angles of the quadrate moving area. The light emitting device provides the light beam when the moving element moves to a specific pair of metal pads. When the moving element moves to the metal pad between the light emitting device and the first photosensitive device, the moving element shelters the light beam emitted by the light emitting device from directly transmitting to the first photosensitive device, and when the moving element moves to the metal pad between the light emitting device and the second photosensitive device, the moving element shelters the light beam emitted by the light emitting device from directly transmitting to the second photosensitive device.

According to an embodiment of the present invention, the moving element is a metal ball, and the size of the metal ball is substantially smaller than or equal to 0.5mm and greater than 0.1mm.

According to an embodiment of the present invention, the moving element is a ball, and the size of the ball is substantially smaller than or equal to 0.5mm and greater than 0.1mm.

The present invention further provides a tilt sensor including a body, a light emitting device, a first photosensitive device, a second photosensitive device, a first moving element, and a second moving element. The body can tilt in a plurality of tilt directions. The light emitting device is disposed at the body for providing a light beam. The first photosensitive device is disposed at the body and located at one side of the light emitting device. The second photosensitive device is disposed at the body and located at another side of the light emitting device. The first moving element is disposed at the body. When the body tilts toward different tilt directions, the first moving element moves toward different tilt directions so that the light beam emitted by the light emitting device directly transmits to the first photosensitive device or is sheltered from directly transmitting to the first photosensitive device. The second moving element is disposed at the body. When the body tilts toward different tilt directions, the second moving element moves toward different tilt directions so that the light beam emitted by the light emitting device directly transmits to the second photosensitive device or is sheltered from directly transmitting to the second photosensitive device.

According to an embodiment of the present invention, the body includes a first moving area, a second moving area, a first containing area, a second containing area, and a third containing area. The first moving area has two first openings opposite to each other, wherein the first moving element is located within the first moving area. The second moving area has two second openings opposite to each other, wherein the second moving element is located within the second moving area. The first containing area is respectively connected to the first moving area and the second moving area through one of the first openings and one of the second openings, wherein the light emitting device is located within the first containing area. The second containing area is connected to the first moving area through the other one of the first openings, wherein the first photosensitive device is located within the second containing area. The third containing area is connected to the second moving area through the other one of the second openings, wherein the second photosensitive device is located within the third containing area. According to an embodiment of the present invention, the light beam emitted by the light emitting device directly transmits to the first photosensitive device through the first openings and directly transmits to the second photosensitive device through the second openings.

According to an embodiment of the present invention, the light emitting device is a side-emitting light emitting diode, and the light beam is an infrared ray.

According to an embodiment of the present invention, the first photosensitive device and the second photosensitive device are a photodiode or a phototransistor.

According to an embodiment of the present invention, the light emitting device, the first photosensitive device, and the second photosensitive device are die-bonded on the same plane.

According to an embodiment of the present invention, the first moving element and the second moving element are respectively a ball, and the size of the balls is substantially smaller than or equal to 0.5mm and greater than 0.1mm.

According to an embodiment of the present invention, the tilt sensor can get to know which tilt direction the tilt sensor tilts toward according to the situation that the first photosensitive device and the second photosensitive device receive the light beam. In addition, because the moving element is a ball which is smaller than or equal to 0.5mm and greater than 0.1mm, and the light emitting device, the first photosensitive device, and the second photosensitive device are die-bonded on the same plane, the size of the tilt sensor is reduced.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a diagram illustrating how a tilt sensor senses different tilt directions according to a first embodiment of the present invention.

FIG. 2 is a diagram illustrating how a tilt sensor senses different tilt directions according to a second embodiment of the present invention.

FIG. 3 is a diagram of an actual implementation of a body 210 in FIG. 2.

FIG. 4 is a diagram illustrating how a tilt sensor senses different tilt directions according to a third embodiment of the present invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

### First Embodiment

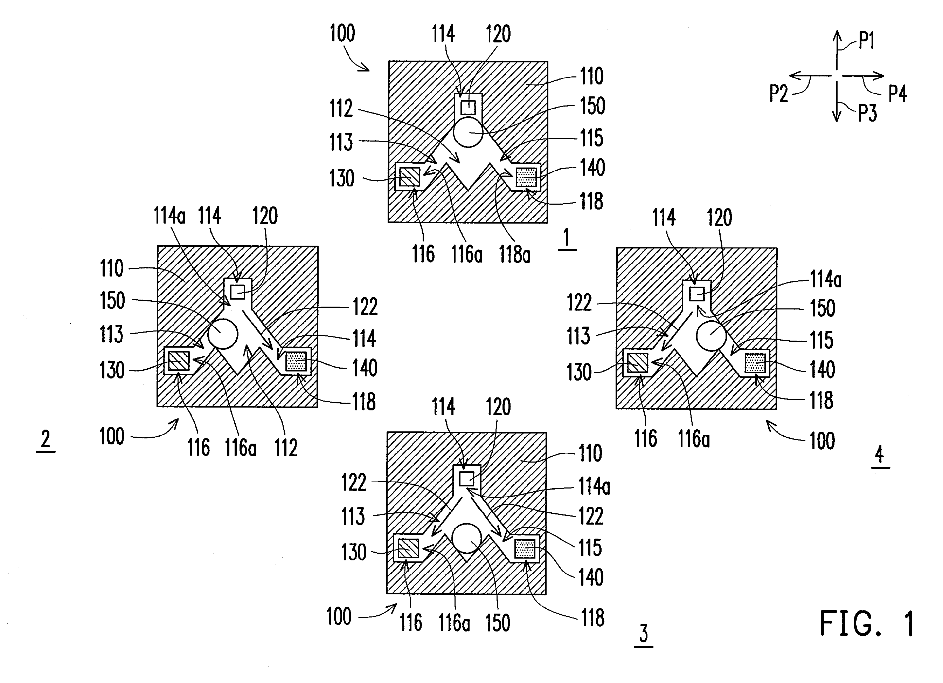

FIG. 1 is a diagram illustrating how a tilt sensor senses different tilt directions according to the first embodiment of the present invention. Referring to FIG. 1, in the present embodiment, the tilt sensor 100 includes a body 110, a light emitting device 120, a first photosensitive device 130, a second photosensitive device 140, and a moving element 150. The light emitting device 120 is disposed at the body 110 for providing a light beam 122. The first photosensitive device 130 is disposed at the body 110 and located at one side of the light emitting device 120. The second photosensitive device 140 is disposed at the body 110 and located at another side of the light emitting device 120. In the present embodiment, the light emitting device 120 is a side-emitting light emitting diode, and the light beam 122 is an infrared ray. Besides, the first photosensitive device 130 and the second photosensitive device 140 may be a photodiode or a phototransistor.

The body 110 can tilt in a plurality of tilt directions P1, P2, P3, and P4. In the present embodiment, the body 110 includes a moving area 112, a first containing area 114, a second containing area 116, a first channel 113, a third containing area 118, and a second channel 115. To be specific, the moving element 150 is located within the moving area 112. The first containing area 114 has a first opening 114a, wherein the light emitting device 120 is located within the first containing area 114, and the first containing area 114 is connected to the moving area 112 through the first opening 114a. The second containing area 116 has a second opening 116a, wherein the first photosensitive device 130 is located within the second containing area 116, and the second containing area 116 is connected to the moving area 112 through the second opening 116a and the first channel 113. The third containing area 118 has a third opening 118a, wherein the second photosensitive device 140 is located within the third containing area 118, and the third containing area 118 is connected to the moving area 112 through the third opening 118a and the second channel 115.

Based on the structure described above, the light beam 122 emitted by the light emitting device 120 disposed within the first containing area 114 sequentially passes through the first opening 114a, the moving area 112, the first channel 113, and the second opening 116a to directly transmit to the first photosensitive device 130, or the light beam 122 sequentially passes through the first opening 114a, the moving area 112, the second channel 115, and the second opening 116a to directly transmit to the second photosensitive device 140.

The moving element 150 is disposed at the body 110. When the body 110 tilts toward different tilt directions P1, P2, P3, and P4, the moving element 150 moves toward different tilt directions so that the light beam 122 emitted by the light emitting device 120 directly transmits to the first photosensitive device 130 and the second photosensitive device 140 or is sheltered from directly transmitting to at least one of the first photosensitive device 130 and the second photosensitive device 140.

To be specific, referring to FIG. 1, the tilt sensor 100 is placed on a horizontal plane, and when the tilt sensor 100 tilts toward different tilt directions P1, P2, P3, and P4, the moving element 150 moves to different positions. For example, when the body 110 tilts toward the tilt direction P1, the moving element 150 in the moving area 112 runs toward the light emitting device 120 due to the pull of gravity, so as to form the situation 1 illustrated in FIG. 1. Thus, the light beam 122 emitted by the light emitting device 120 is sheltered by the moving element 150 and cannot transmit to the first photosensitive device 130 and the second photosensitive device 140.

Similarly, when the body 110 tilts toward the tilt direction P2, the moving element 150 in the moving area 112 runs toward the first photosensitive device 130 due to the pull of gravity, so as to form the situation 2 illustrated in FIG. 1. Thus, the moving element 150 shelters the first channel 113 so that the light beam 122 emitted by the light emitting device 120 can only transmit to the second photosensitive device 140 but not the first photosensitive device 130.

Similarly, when the body 110 respectively tilts toward the tilt directions P3 and P4, the moving element 150 in the moving area 112 respectively runs away from the light emitting device 120 and toward the second photosensitive device 140, so as to respectively form the situations 3 and 4 illustrated in FIG. 1. To be specific, in the situation 3, the moving element 150 runs away from the light emitting device 120 so that the light beam 122 emitted by the light emitting device 120 can directly transmit to both the first photosensitive device 130 and the second photosensitive device 140. In the situation 4, the moving element 150 runs toward the second photosensitive device 140. Accordingly, the moving element 150 shelters the second channel 115 so that the light beam 122 emitted by the light emitting device 120 can only transmit to the first photosensitive device 130 but not the second photosensitive device 140. In other words, the tilt sensor 100 in the present embodiment can get to know which tilt direction the body 110 tilts toward according to the situation that the first photosensitive device 130 and the second photosensitive device 140 receive the light beam 122.

In the present embodiment, the moving element 150 is a ball, and the size of the ball is substantially smaller than or equal to 0.5mm and greater than 0.1mm. In addition, the ball may be made of a metal material, a plastic material, or other suitable materials. The ball in the present embodiment is made of a metal material, but the present invention is not limited thereto. In another embodiment of the present invention, the ball may also be a reflective ball.

Additionally, in order to further reduce the thickness of the tilt sensor 100, in the present embodiment, the light emitting device 120, the first photosensitive device 130, and the second photosensitive device 140 are die-bonded on the same plane, namely, the light emitting device 120, the first photosensitive device 130, and the second photosensitive device 140 are fabricated on the same plane, and the light emitting device 120 is a side-emitting light emitting diode. Thus, the thickness of the tilt sensor 100 can be effectively reduced to 0.8mm or even smaller.

As described above, in the present embodiment, the design of the body 110 in the tilt sensor 100 allows the light beam 122 emitted by the light emitting device 120 to directly irradiate on the first photosensitive device 130 and the second photosensitive device 140, and a moving element 150 is disposed in the body 110. The moving element 150 moves toward different tilt directions due to the pull of gravity when the tilt sensor 100 tilts toward different tilt directions, and through the sheltering effect of the moving element 150, different light receiving situations at the first photosensitive device 130 and the second photosensitive device 140 are produced.

Accordingly, the tilt sensor 100 in the present embodiment can get to know which tilt direction the body 110 tilts toward according to the situation that the first photosensitive device 130 and the second photosensitive device 140 receive the light beam 122. Moreover, because the moving element 150 is a ball which is substantially smaller than or equal to 0.5mm and greater than 0.1mm, and the light emitting device 120, the first photosensitive device 130, and the second photosensitive device 140 are die-bonded on the same plane, the thickness of the tilt sensor 100 is further reduced to 0.8mm or even smaller.

### Second Embodiment

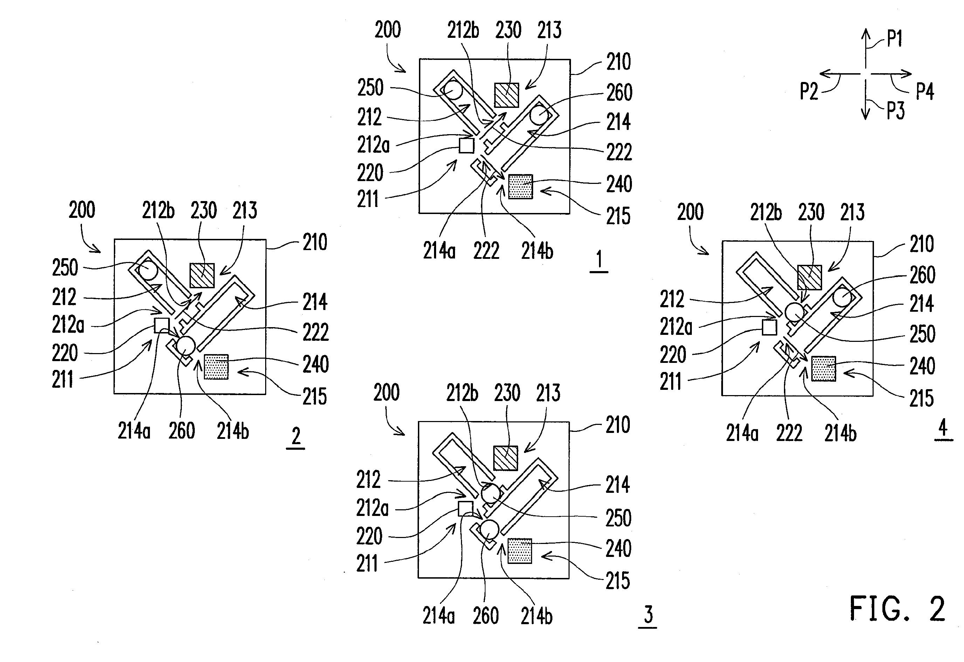

FIG. 2 is a diagram illustrating how a tilt sensor senses different tilt directions according to the second embodiment of the present invention. Referring to FIG. 2, in the present embodiment, the tilt sensor 200 includes a body 210, a light emitting device 220, a first photosensitive device 230, a second photosensitive device 240, a first moving element 250, and a second moving element 260. The light emitting device 220 is disposed at the body 210 for providing a light beam 222. The first photosensitive device 230 is disposed at the body 210 and located at one side of the light emitting device 220. The second photosensitive device 240 is disposed at the body 210 and located at another side of the light emitting device 220. In the present embodiment, the light emitting device 220 is a side-emitting light emitting diode, and the light beam 222 is an infrared ray. Besides, the first photosensitive device 230 and the second photosensitive device 240 may be a photodiode or a phototransistor.

The body 210 can tilt in a plurality of tilt directions P1, P2, P3, and P4. In the present embodiment, the body 210 includes a first moving area 212, a second moving area 214, a first containing area 211, a second containing area 213, and a third containing area 215. The first moving area 212 has two first openings 212a and 212b opposite to each other, wherein the first moving element 250 is located within the first moving area 212. The second moving area 214 has two second openings 214a and 214b opposite to each other, wherein the second moving element 260 is located within the second moving area 214. The first containing area 211 is respectively connected to the first moving area 212 and the second moving area 214 through the first opening 212a and the second opening 214a, wherein the light emitting device 220 is located within the first containing area 211. The second containing area 213 is connected to the first moving area 212 through the first opening 212b, wherein the first photosensitive device 230 is located within the second containing area 213. The third containing area 215 is connected to the second moving area 214 through the second opening 214b, wherein the second photosensitive device 240 is located within third containing area 215.

In the present embodiment, the extension direction of the first moving area 212 is substantially perpendicular to the extension direction of the second moving area 214. Based on the structure described above, the light beam 222 emitted by the light emitting device 220 can directly transmit to the first photosensitive device 230 through the first openings 212a and 212b or directly transmit to the second photosensitive device 240 through the second openings 214a and 214b.

The first moving element 250 is disposed at the body 210. When the body 210 tilts toward different tilt directions P1, P2, P3, and P4, the first moving element 250 moves toward different tilt directions so that the light beam 222 emitted by the light emitting device 220 directly transmits to the first photosensitive device 230 or is sheltered from directly transmitting to the first photosensitive device 230. The second moving element 260 is disposed at the body 210. When the body 210 tilts toward different tilt directions P1, P2, P3, and P4, the second moving element 260 moves toward different tilt directions so that the light beam 222 emitted by the light emitting device 220 directly transmits to the second photosensitive device 240 or is sheltered from directly transmitting to the second photosensitive device 240.

To be specific, referring to FIG. 2, the tilt sensor 200 is placed on a horizontal plane, and when the tilt sensor 200 tilts toward different tilt directions P1, P2, P3, and P4, the first moving element 250 and the second moving element 260 respectively move to different positions. For example, when the body 210 tilts toward the tilt direction P1, the first moving element 250 in the first moving area 212 and the second moving element 260 in the second moving area 214 run away from the light emitting device 220 due to the pull of gravity, so as to form the situation 1 illustrated in FIG. 2. Thus, the light beam 222 emitted by the light emitting device 220 directly transmits to the first photosensitive device 230 and the second photosensitive device 240.

Similarly, when the body 210 tilts toward the tilt direction P2, the first moving element 250 in the first moving area 212 and the second moving element 260 in the second moving area 214 respectively run away from the light emitting device 220 and toward the light emitting device 220 due to the pull of gravity, so as to form the situation 2 illustrated in FIG. 2. Thus, the second moving element 260 shelters the second openings 214a and 214b of the second moving area 214 so that the light beam 222 emitted by the light emitting device 220 can only transmit to the first photosensitive device 230 but not the second photosensitive device 240.

Similarly, when the body 210 tilts toward the tilt direction P3, the first moving element 250 in the first moving area 212 and the second moving element 260 in the second moving area 214 respectively run toward the light emitting device 220, so as to form the situation 3 illustrated in FIG. 2. Thus, the first moving element 250 and the second moving element 260 respectively bock the first openings 212a and 212b of the first moving area 212 and the second openings 214a and 214b of the second moving area 214. As a result, the light beam 222 emitted by the light emitting device 220 cannot transmit to the first photosensitive device 230 or the second photosensitive device 240.

In addition, when the body 210 tilts toward the tilt direction P4, the first moving element 250 in the first moving area 212 and the second moving element 260 in the second moving area 214 respectively run toward the light emitting device 220 and away from the light emitting device 220, so as to form the situation 4 illustrated in FIG. 2. Thus, the first moving element 250 shelters the first openings 212a and 212b of the first moving area 212. As a result, the light beam 222 emitted by the light emitting device 220 can only transmit to the second photosensitive device 240 but not the first photosensitive device 230. In other words, as the tilt sensor 100 in the embodiment described above, the tilt sensor 200 in the present embodiment can get to know which tilt direction the body 210 tilts toward according to the situation that the first photosensitive device 230 and the second photosensitive device 240 receive the light beam 222.

In the present embodiment, the first moving element 250 and the second moving element 260 are balls, and the size of the balls is substantially smaller than or equal to 0.5mm and greater than 0.1mm. Besides, the balls may be made of a metal material, a plastic material, or other suitable materials. The balls in the present embodiment are made of a metal material, but the present invention is not limited thereto. In another embodiment of the present invention, the balls may also be reflective balls.

Similarly, in order to reduce the thickness of the tilt sensor 200, in the present embodiment, the light emitting device 220, the first photosensitive device 230, and the second photosensitive device 240 are die-bonded on the same plane, so that the thickness of the tilt sensor 200 can be effectively reduced to 0.8mm, or even smaller.

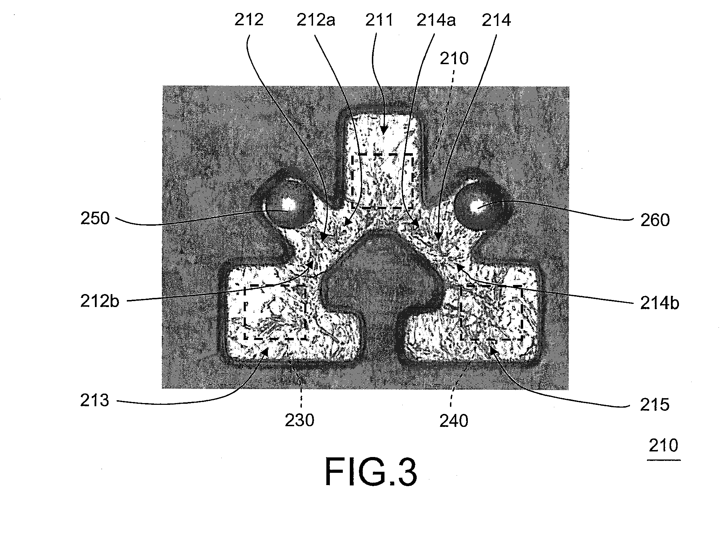

It should be mentioned that FIG. 2 is only a diagram illustrating how conceptually the tilt sensor 200 senses different tilt directions but not intended for limiting the scope of the present invention. Through proper design of the body 210, the body 210, the first moving element 250, and the second moving element 260 may also adopt the designs as illustrated in FIG. 3, and the operation mechanism of the tilt sensor is the same as that described above, wherein FIG. 3 is a diagram of an actual implementation of the body 210 in FIG. 2. In other words, FIG. 2 and FIG. 3 only illustrate the design concept of the tilt sensor 200 but not for limiting the scope of the present invention, and those having ordinary knowledge in the art should be able to make various changes in form and details based on foregoing description and accompanying drawings.

As described above, in the present embodiment, through the proper design of body 210 in the tilt sensor 200, the light beam 222 emitted by the light emitting device 220 can directly transmit to the first photosensitive device 230 and the second photosensitive device 240, and the first moving element 250 and the second moving element 260 are disposed in the body 210. When the tilt sensor 200 tilts toward different tilt directions, the first moving element 250 and the second moving element 260 in the body 210 move toward different directions due to the pull of gravity. Through the sheltering effect of the moving elements 250 and 260, different light receiving situations at the first photosensitive device 230 and the second photosensitive device 240 are produced.

Accordingly, the tilt sensor 200 in the present embodiment can get to know which tilt direction the body 210 tilts toward according to the situation that the first photosensitive device 230 and the second photosensitive device 240 receive the light beam 222. Moreover, because the first moving element 250 is a ball smaller than or equal to 0.5mm and greater than 0.1mm, and the light emitting device 220, the first photosensitive device 230, and the second photosensitive device 240 are die-bonded on the same plane, the thickness of the tilt sensor 200 is effectively reduced to 0.8mm or even smaller.

### Third Embodiment

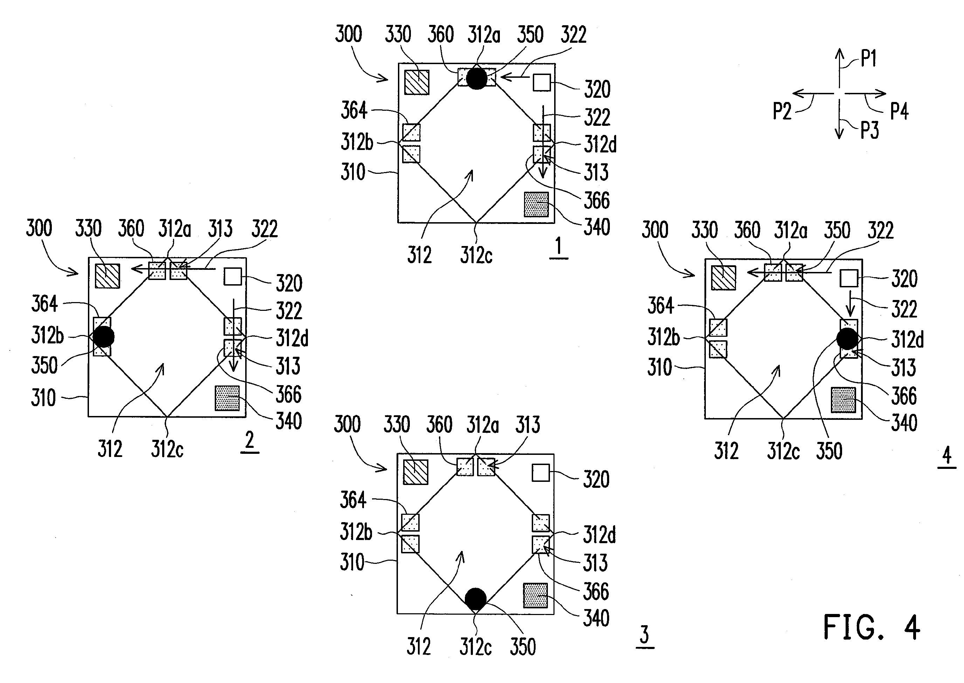

FIG. 4 is a diagram illustrating how a tilt sensor senses different tilt directions according to the third embodiment of the present invention. Referring to FIG. 4, in the present embodiment, the tilt sensor 300 includes a body 310, a light emitting device 320, a first photosensitive device 330, a second photosensitive device 340, and a moving element 350. The light emitting device 320 is disposed at the body 310 for providing a light beam 322. The first photosensitive device 330 is disposed at the body 310 and located at one side of the light emitting device 320. The second photosensitive device 340 is disposed at the body 310 and located at another side of the light emitting device 320. In the present embodiment, the light emitting device 320 is a side-emitting light emitting diode, and the light beam 322 is an infrared ray. Besides, the first photosensitive device 330 and the second photosensitive device 340 may be a photodiode or a phototransistor.

The body 310 can tilts in a plurality of tilt directions P1, P2, P3, and P4. In the present embodiment, the body 310 includes a quadrate moving area 312, a first containing area 314, a second containing area 316, and a third containing area 318. To be specific, the quadrate moving area 312 has four apex angles 312a, 312b, 312c, and 312d, and the two sides of each of the apex angles 312a, 312b, 312c, and 312d respectively have an opening, wherein the moving element 350 is located within the quadrate moving area 312, as shown in FIG. 4. The first containing area 314 is connected to the quadrate moving area 312 through the opening 313, wherein the light emitting device 320 is located within the first containing area 314. The second containing area 316 is connected to the quadrate moving area 312 through the opening 313, wherein the first photosensitive device 330 is located within the second containing area 316. The third containing area 318 is connected to the quadrate moving area 312 through the opening 313, wherein the second photosensitive device 340 is located within the third containing area 318.

Based on the structure described above, the light beam 322 emitted by the light emitting device 320 in the first containing area 314 sequentially passes through the opening 313, the quadrate moving area 312, and the opening 313, so as to directly transmit to the first photosensitive device 330 and the second photosensitive device 340 respectively.

The moving element 350 is disposed at the body 310. When the body 310 tilts toward different tilt directions P1, P2, P3, and P4, the moving element 350 moves toward different tilt directions so that the light beam 322 emitted by the light emitting device 320 directly transmits to the first photosensitive device 330 and the second photosensitive device 140 or is sheltered from directly transmitting to the first photosensitive device 330 or the second photosensitive device 340.

In the present embodiment, the tilt sensor 300 further includes a plurality of pairs of metal pads 360, 364, and 366, wherein the metal pads 360, 364, and 366 are respectively disposed at the apex angles 312a, 312b, and 312d of the quadrate moving area 312. When the moving element 350 moves to any pair of metal pads 360, 364, or 366, the light emitting device 320 provides the light beam 322. In addition, when the moving element 350 moves to the pair of metal pads 360 between the light emitting device 320 and the first photosensitive device 330, the moving element 350 shelters the light beam 322 emitted by the light emitting device 320 from directly transmitting to the first photosensitive device 330, and when the moving element 350 moves to the pair of metal pads 366 between the light emitting device 320 and the second photosensitive device 340, the moving element 350 shelters the light beam 322 emitted by the light emitting device 320 from directly transmitting to the second photosensitive device 340.

To be specific, referring to FIG. 4, the tilt sensor 300 is placed on a horizontal plane, and when the tilt sensor 300 tilts toward different tilt directions P1, P2, P3, and P4, the moving element 350 moves to different positions. For example, when the body 310 tilts toward the tilt direction P1, the moving element 350 in the quadrate moving area 312 runs toward the apex angle 312a between the light emitting device 320 and the second photosensitive device 340 due to the pull of gravity, so as to form the situation 1 illustrated in FIG. 4. Thus, because the moving element 350 moves to the pair of metal pads 360 between the light emitting device 320 and the first photosensitive device 330, the light emitting device 320 provides the light beam 322. However, because the moving element 350 shelters the openings 313 on the two sides of the apex angle 312a, the light beam 322 emitted by the light emitting device 320 is sheltered from directly transmitting to the first photosensitive device 330. In other words, only the second photosensitive device 340 can receive the light beam 322.

Similarly, when the body 310 tilts toward the tilt direction P2, the moving element 350 in the quadrate moving area 312 runs toward the apex angle 312b due to the pull of gravity, so as to form the situation 2 illustrated in FIG. 4. Because the moving element 350 moves to the pair of metal pads 364, the light emitting device 320 also provides the light beam 322, and since the moving element 350 does not shelter the openings 313 on the two sides of the apex angle 312a and the openings 313 on the two sides of the apex angle 312d, the light beam 322 emitted by the light emitting device 320 directly transmits to the first photosensitive device 330 and the second photosensitive device 340.

Similarly, when the body 310 respectively tilts toward the tilt directions P3 and P4, the moving element 350 in the moving area 312 respectively runs toward the apex angle 312c and the apex angle 312d, so as to respectively form the situations 3 and 4 illustrated in FIG. 4. To be specific, in the situation 3, because the apex angle 312c has no metal pad, the light emitting device 320 does not emit the light beam 322. In other words, in this situation, the first photosensitive device 330 and the second photosensitive device 340 do not receive the light beam 322. In the situation 4, because the moving element 350 moves to the pair of metal pads 366 between the light emitting device 320 and the second photosensitive device 340, the light emitting device 320 provides the light beam 322. However, since the moving element 350 shelters the openings 313 on the two sides of the apex angle 312d, the light beam 322 emitted by the light emitting device 320 is sheltered from directly transmitting to the second photosensitive device 340. In other words, only the first photosensitive device 330 receives the light beam 322. Thereby, the tilt sensor 300 in the present embodiment can also get to know which tilt direction the body 310 tilts toward according to the situation that the first photosensitive device 330 and the second photosensitive device 340 receive the light beam 322.

In the present embodiment, the moving element 350 is a ball, and the size of the ball is substantially smaller than or equal to 0.5mm and greater than 0.1mm. Besides, in the present embodiment, the ball is made of a metal material.

Additionally, in order to further reduce the thickness of the tilt sensor 300, in the present embodiment, the light emitting device 320, the first photosensitive device 330, and the second photosensitive device 340 are die-bonded on the same plane, namely, the light emitting device 320, the first photosensitive device 330, and the second photosensitive device 340 are fabricated on the same plane, and the light emitting device 320 is a side-emitting light emitting diode. Accordingly, the thickness of the tilt sensor 300 is effectively reduced to 0.8mm, or even smaller.

As described above, in the present embodiment, through the proper design of the body 310 in the tilt sensor 300, the light beam 322 emitted by the light emitting device 320 can directly transmit to the first photosensitive device 330 and the second photosensitive device 340, and the moving element 350 and a plurality of pairs of metal pads 360, 364, and 366 are disposed in the body 310. When the tilt sensor 300 tilts toward different tilt directions, the moving element 350 moves to different positions. When the moving element 350 touches the metal pads, the light emitting device 320 emits the light beam 322, so that the moving element 350 in the body 310 moves toward different directions due to the pull of gravity. As a result, different light receiving situations at the first photosensitive device 330 and the second photosensitive device 340 are produced.

In other words, the tilt sensor 300 in the present embodiment can get to know which tilt direction the body 310 tilts toward according to the situation that the first photosensitive device 330 and the second photosensitive device 340 receive the light beam 322. Moreover, because the moving element 350 is a ball which is smaller than or equal to 0.5mm and greater than 0.1mm, and the light emitting device 320, the first photosensitive device 330, and the second photosensitive device 340 are die-bonded on the same plane, the thickness of the tilt sensor 100 is effectively reduced to 0.8mm or even smaller.

As described above, the present invention provides a tilt sensor having at least following advantages. First, through proper design of the body, the light beam emitted by the light emitting device can directly transmit to the first photosensitive device and the second photosensitive device, and by adopting a moving element, different light receiving situations at the first photosensitive device and the second photosensitive device are produced. In other words, which tilt direction the tilt sensor tilts toward can be understood according to the situation that the first photosensitive device and the second photosensitive device receive the light beam. Moreover, because the moving element is a ball which is smaller than or equal to 0.5mm and greater than 0.1mm, and the light emitting device, the first photosensitive device, and the second photosensitive device are die-bonded on the same plane, the thickness of the tilt sensor is effectively reduced.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A tilt sensor (100, 300), comprising:
a body (110, 310), suitable for tilting in a plurality of tilt directions (P1, P2, P3, P4);
a light emitting device (120, 320), disposed at the body (110, 310) for providing a light beam (122, 322);
a first photosensitive device (130, 330), disposed at the body (110, 310) and located at one side of the light emitting device (120, 320);
a second photosensitive device (140, 340), disposed at the body (110, 310) and located at another side of the light emitting device (120, 320); and
a moving element (150, 350), disposed at the body (110, 310), wherein when the body (110, 310) tilts toward different tilt directions (P1, P2, P3, P4), the moving element (150, 350) moves toward different tilt directions (PI, P2, P3, P4) so that the light beam (122, 322) emitted by the light emitting device (120, 320) directly transmits to the first photosensitive device (130, 330) and the second photosensitive device (140, 340) or is sheltered from directly transmitting to at least one of the first photosensitive device (130, 330) and the second photosensitive device (140, 340).

2. The tilt sensor according to claim 1, wherein the body (110) comprises:
a moving area (112), wherein the moving element (150) is located within the moving area (112);
a first containing area (114), having a first opening (114a), wherein the light emitting device (120) is located within the first containing area (114), and the first containing area (114) is connected to the moving area (112) through the first opening (114a);
a second containing area (116), having a second opening (116a), wherein the first photosensitive device (130) is located within the second containing area (116);
a first channel (113), wherein the second containing area (116) is connected to the moving area (112) through the second opening (116a) and the first channel (113);
a third containing area (118), having a third opening (118a), wherein the second photosensitive device (140) is located within the third containing area (118); and
a second channel (115), wherein the third containing area (118) is connected to the moving area (112) through the third opening (118a) and the second channel (115).

3. The tilt sensor according to claim 1, wherein the body (310) comprises:
a quadrate moving area (312), having four apex angles (312a, 312b, 312c, 312d), wherein two sides of each of the apex angles (312a, 312b, 312c, 312d) respectively have an opening (313), and the moving element (350) is located within the quadrate moving area (312);
a first containing area (314), connected to the quadrate moving area (312) through the opening (313), wherein the light emitting device (320) is located within the first containing area (314);
a second containing area (316), connected to the quadrate moving area (312) through the opening (313), wherein the first photosensitive device (330) is located within the second containing area (316); and
a third containing area (318), connected to the quadrate moving area (312) through the opening (313), wherein the second photosensitive device (340) is located within the third containing area (318),
wherein the light beam (322) emitted by the light emitting device (320) passes through the opening (313), the quadrate moving area (312), and the opening (313) in sequence to directly transmit to the first photosensitive device (330) and the second photosensitive device (340) respectively.

4. The tilt sensor according to claim 3 further comprising a plurality of pairs of metal pads (360, 364, 366) respectively disposed at the apex angles (312a, 312b, 312c, 312d) of the quadrate moving area (312), wherein the light emitting device (320) provides the light beam (322) when the moving element (350) moves to the pair of metal pads (364), and when the moving element (350) moves to the metal pad (360) between the light emitting device (320) and the first photosensitive device (330), the moving element (350) shelters the light beam (322) emitted by the light emitting device (320) from directly transmitting to the first photosensitive device (330), and when the moving element (350) moves to the metal pad (366) between the light emitting device (320) and the second photosensitive device (340), the moving element (350) shelters the light beam (322) emitted by the light emitting device (320) from directly transmitting to the second photosensitive device (340).

5. The tilt sensor according to claim 4, wherein the moving element (350) is a metal ball, and a size of the metal ball is substantially smaller than or equal to 0.5mm and greater than 0.1mm.

6. The tilt sensor as claimed in any of the preceding claims, wherein the light emitting device (120, 320) is a side-emitting light emitting diode, and the light beam is an infrared ray.

7. The tilt sensor according as claimed in any of the preceding claims, wherein the first photosensitive device (130, 330) and the second photosensitive device (140, 340) are a photodiode or a phototransistor.

8. The tilt sensor according as claimed in any of the preceding claims, wherein the light emitting device (120, 320), the first photosensitive device (130,330), and the second photosensitive device (140, 340) are die-bonded on a same plane.

9. The tilt sensor according as claimed in any of the preceding claims, wherein the moving element (150, 350) is a ball, and a size of the ball is substantially smaller than or equal to 0.5mm and greater than 0.1mm.

10. A tilt sensor (200), comprising:
a body (210), suitable for tilting in a plurality of tilt directions (PI, P2, P3, P4);
a light emitting device (220), disposed at the body (210) for providing a light beam (222);
a first photosensitive device (230), disposed at the body (210) and located at one side of the light emitting device (220);
a second photosensitive device (240), disposed at the body (210) and located at another side of the light emitting device (220);
a first moving element (250), disposed at the body (210), wherein when the body (210) tilts toward different tilt directions (P1, P2, P3, P4), the first moving element (250) moves toward different tilt directions (PI, P2, P3, P4) so that the light beam (222) emitted by the light emitting device (220) directly transmits to the first photosensitive device (230) or is sheltered from directly transmitting to the first photosensitive device (230); and
a second moving element (260), disposed at the body (210), wherein when the body (210) tilts toward different tilt directions (PI, P2, P3, P4), the second moving element (260) moves toward different tilt directions (PI, P2, P3, P4) so that the light beam (222) emitted by the light emitting device (220) directly transmits to the second photosensitive device (240) or is sheltered from directly transmitting to the second photosensitive device (240).

11. The tilt sensor according to claim 10, wherein the body (210) comprises:
a first moving area (212), having two first openings (212a, 212b) opposite to each other, wherein the first moving element (250) is located within the first moving area (212);
a second moving area (214), having two second openings (214a,214b) opposite to each other, wherein the second moving element (260) is located within the second moving area (214);
a first containing area (211), respectively connected to the first moving area (212) and the second moving area (214) through one of the first openings (212a,212b) and one of the second openings (214a, 214b), wherein the light emitting device (220) is located within the first containing area (211);
a second containing area (213), connected to the first moving area (212) through the other one of the first openings (212a, 212b), wherein the first photosensitive device (230) is located within the second containing area (213); and
a third containing area (215), connected to the second moving area (214) through the other one of the second openings (214a, 214b), wherein the second photosensitive device (240) is located within the third containing area (215),
wherein the light beam (222) emitted by the light emitting device (220) directly transmits to the first photosensitive device (230) through the first openings (212a, 212b) and directly transmits to the second photosensitive device (240) through the second openings (214a, 214b).

12. The tilt sensor according to claim 11, wherein an extension direction of the first moving area (212) is substantially perpendicular to an extension direction of the second moving area (214).

13. The tilt sensor according as claimed in any of the preceding claims, wherein the light emitting device (220) is a side-emitting light emitting diode, and the light beam (222) is an infrared ray.

14. The tilt sensor according as claimed in any of the preceding claims, wherein the first photosensitive device (230) and the second photosensitive device (240) are a photodiode or a phototransistor.

15. The tilt sensor according as claimed in any of the preceding claims, wherein the light emitting device (220), the first photosensitive device (230), and the second photosensitive device (240) are die-bonded on a same plane.

16. The tilt sensor according as claimed in any of the preceding claims, wherein the first moving element (250) and the second moving element (260) are respectively a ball, and a size of the balls is substantially smaller than or equal to 0.5mm and greater than 0.1mm.

17. A tilt sensor (100), comprising:
a body (110), suitable for tilting in a plurality of tilt directions (P1, P2, P3, P4), wherein the body (110) comprises:
a moving area (112);
a first containing area (114), having a first opening (114a), connected to the moving area (112) through the first opening (114a);
a second containing area (116), having a second opening (116a);
a first channel (113), wherein the second containing area (116) is connected to the moving area (112) through the second opening (116a) and the first channel (113);
a third containing area (118), having a third opening (118a);
a second channel (115), wherein the third containing area (118) is connected to the moving area (112) through the third opening (118a) and the second channel (115);
a light emitting device (120), located within the first containing area (114) for providing a light beam (122);
a first photosensitive device (130), located within the second containing area (116) and at one side of the light emitting device (120);
a second photosensitive device (140), located within the third containing area (118) and at another side of the light emitting device (120); and
a moving element (150), located within the moving area (112), wherein when the body (110) tilts toward different tilt directions (P1, P2, P3, P4), the moving element (150) moves toward different tilt directions (PI, P2, P3, P4) so that the light beam (122) emitted by the light emitting device (120) directly transmits to the first photosensitive device (130) and the second photosensitive device (140) or is sheltered from directly transmitting to at least one of the first photosensitive device (130) and the second photosensitive device (140).

18. A tilt sensor (300), comprising:
a body (310), suitable for tilting in a plurality of tilt directions (PI, P2, P3, P4), wherein the body (310) comprises:
a quadrate moving area (312), having four apex angles (312a, 312b, 312c, 312d), wherein two sides of each of the apex angles (312a, 312b, 312c, 312d) respectively have an opening (313);
a first containing area (314), connected to the quadrate moving area (312) through the opening (313);
a second containing area (316), connected to the quadrate moving area (312) through the opening (313);
a third containing area (318), connected to the quadrate moving area (312) through the opening (313),
a light emitting device (320), located within the first containing area (314) for providing a light beam (322);
a first photosensitive device (330), located within the second containing area (316) and at one side of the light emitting device (320);
a second photosensitive device (340), located within the third containing area (318) and at another side of the light emitting device (320);
a moving element (350), located within the quadrate moving area (312), wherein when the body (310) tilts toward different tilt directions (P1, P2, P3, P4), the moving element (350) moves toward different tilt directions (P1, P2, P3, P4); and
a plurality of pairs of metal pads (360, 364, 366), respectively disposed at the apex angles (312a, 312b, 312c, 312d) of the quadrate moving area (312), wherein the light emitting device (320) provides the light beam (322) when the moving element (350) moves to the pair of metal pads (364), and when the moving element (350) moves to the metal pad (360) between the light emitting device (320) and the first photosensitive device (330), the moving element (350) shelters the light beam (322) emitted by the light emitting device (320) from directly transmitting to the first photosensitive device (330), and when the moving element (350) moves to the metal pad (366) between the light emitting device (320) and the second photosensitive device (340), the moving element (350) shelters the light beam (322) emitted by the light emitting device (320) from directly transmitting to the second photosensitive device (340).
